# EUROPEAN PATENT APPLICATION

(11) **EP 2 506 568 A1**
(43) Date of publication of application: **03.10.2012**
(21) Application number: 11290157.4
(22) Date of filing: 30.03.2011
(51) Int. Cl.: H04N 7/14, H04N 7/15

(54) **A method, a system, a device, a computer program and a computer program product for conducting a video conference**

(71) Applicant: Alcatel Lucent, 75007 Paris (FR)
(72) Inventor: Klotsche, Ralf, 75305 Neuenbuerg (DE)
(74) Representative: Wetzel, Emmanuelle

(57) **Abstract**

The invention concerns conducting a video conference, wherein from a first image of a video stream recorded by a camera (145, 146, 147, 148, 165) at least a part is sent to be displayed at a remote location, wherein at least one additional image is determined and sent at least partially to be displayed adjacent to said first image at said remote location.

## Description

### Field of the invention

The invention relates to a method, a system, a device, a computer program and a computer program product for conducting a video conference.

### Background

In an implementation capable of conducting a video conference, the image of a person participating in a conference is recorded and can be displayed from a predetermined direction relative to the person, typically from the front, showing the face of the person.

However, showing the picture of a person from a predetermined direction makes orientation in a virtual conference room difficult, as it is impossible to determine the position of that person relative to other persons from this image.

### Summary

The object of the invention is thus to enhance the usability of video conferencing.

The main idea of the invention is to conduct a video conference wherein from a first image of a video stream recorded by a camera at least a part is sent to be displayed at a remote location, wherein at least one additional image is sent at least partially to be displayed adjacent to said first image at said remote location. This way information about the surroundings of a first object, e.g. a first person participating said video conference, is available at the remote location to be displayed adjacent to the video conference video stream hence improving the orientation of a person participating in said video conference.

Advantageously said additional image is recorded as image of a video stream and said additional image is displayed at said remote location as a part of a video stream. This improves the orientation further due to the moving images of the surroundings.

Advantageously said additional image is recorded as a still image and said additional image is displayed at said remote location as a still image. This reduces the amount of data significantly while still giving a good orientation of the surroundings with a better sequence of images at a moderate data rate.

Advantageously said additional image is sent to said remote location at a lower resolution as said first image, wherein said resolution is determined depending on information received from said remote location, in particular a desired viewing angle or an orientation. This reduces the amount of data even more while the main video feed has the appropriate resolution to guarantee a high quality video conference service.

Advantageously said additional image is sent to said remote location at a lower data rate as said video stream containing said first image, wherein said data rate is determined depending on information received from said remote location, in particular a desired viewing angle or an orientation. This reduces the data transmission rate for the information about the surroundings, giving more capacity to the main video feed to guarantee a high quality video conference service for directions having focus.

Advantageously said additional image is showing part of a scene essentially adjacent to the part of the scene shown by said first image part. This guarantees seamless continuation of the images displayed at the remote location and improves the user experience.

Advantageously said first image is selected depending on information received from said remote location, in particular a desired viewing angle or an orientation. This way the user at the remote site can control the angle and point of view from which he looks at the object or person participating in the video conference.

Advantageously said desired viewing angle or said orientation are determined from a position of a first object recorded by said camera relative to a second object recorded by another camera at said remote location. This way a realistic interaction between participants of said video conference is achieved from automatic detected behavior of participants.

Advantageously said first image is determined from individual images recorded by multiple cameras in individual video streams, in particular depending on said desired viewing angle or said orientation, received from said remote location.

Advantageously transmission of said signals is in real time hence improving speed and overall user experience.

Further developments of the invention can be gathered from dependent claims and the following description.

### Brief description of the figures

In the following the invention will be explained further making reference to the attached drawings.
Fig. 1 schematically shows a first part of a system for conducting a video conference.
Fig. 2 schematically shows a first flow chart.
Fig. 3 schematically shows part of a virtual conference room.

### Description of the embodiments

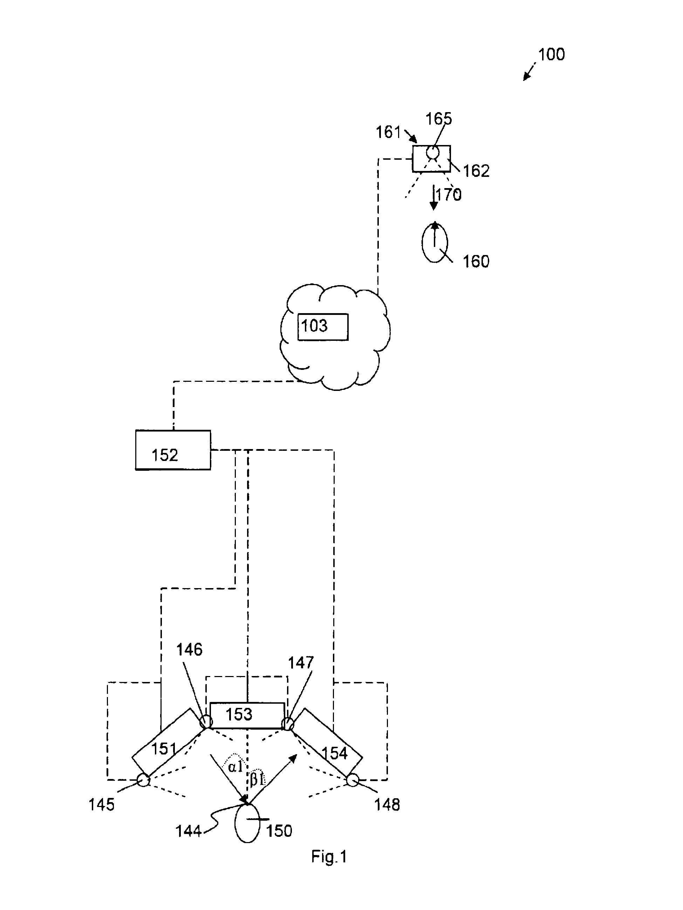

Fig. 1 schematically shows a first part of a system 100 for conducting a video conference.

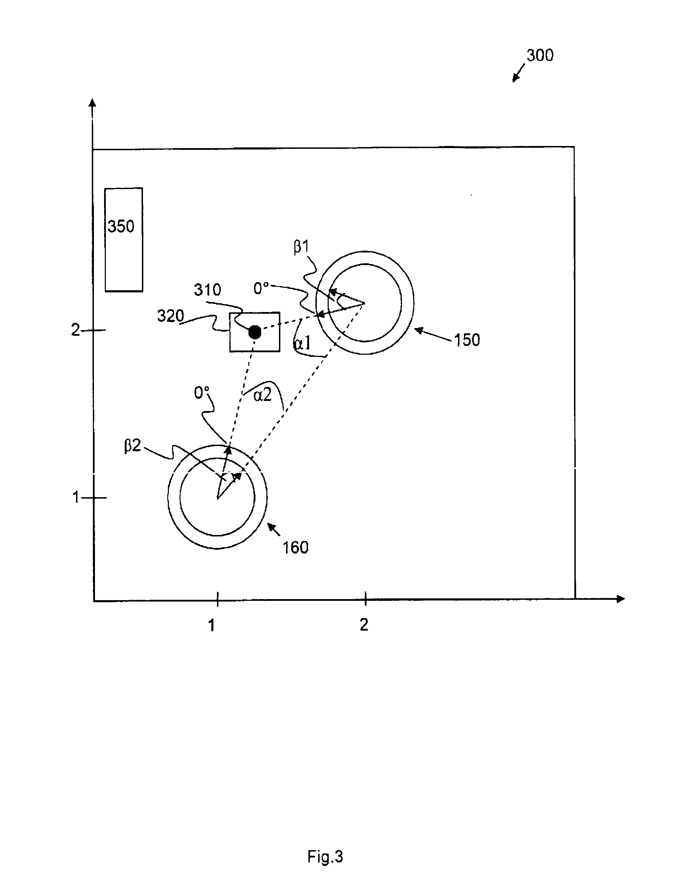

Fig. 3 schematically shows part of a virtual conference room 300.

Goal of the invention is to enhance user experience, in particular orientation of participants in said video conference. In an example said virtual video conference room 300 has walls in rectangular shape and participants are in real world video conference rooms of rectangular shape with walls made of canvas. In this scenario projectors are used to project an image of said virtual conference room 300 to the canvas covering 360° round view relative to the position of said participants in said virtual conference room 300. The position of said participants in said virtual conference room 300 may be determined by the actual position of said participant in their real world conference rooms. The same setup may be used at any location, resulting in a display said locations of all of said participants.

A goal of this invention is to reduce the amount of data traffic. Therefore content is transferred in different ways, e.g. as video streams or images (still images) with different resolutions. The way of transferring the content is selected per location from information received from the other locations.

This selection is based on actual viewing direction of participants in the respective real world conference rooms the position and orientation of a representation of said participants in said virtual conference room 300.

The invention also applies to any setup with less than 360° real world conference rooms.

The invention is described below for such less than 360° setup by an example of two remote locations with two participants each using a device to connect to said video conference. The invention applies also to multiple remote locations and multiple participants, connected to the video conference via one device each. The invention also applies to the case where multiple persons in a room are using a single device to connect to one or more other participants in one or more remote locations.

The example is described using video streams. Said video streams transfer said images or parts of said images that are taken by cameras and may or may not be processed, e.g. compressed or cropped. Additional information regarding the camera, e.g. a unique identifier, current camera position and time the image was taken may be included in said video stream. The invention applies also to scenarios where other means of video transmission are used.

The resolution of the images is selectable. For example 640*480 pixels is used as normal resolution or 320*240 pixel as less than normal resolution for images and video streams. Other resolutions may be used instead, images or video signals may be processed, e.g. to compress the data or to enhance the image or video signal. Methods for image or video processing are well known and not further explained here.

In the example a first device 152 is located at a first location. A second device 161 is located at a second location, remote from said first location.

Said first device 152 and said second device 161 are connected for example via local area network (LAN), wireless local area network (WLAN, 802.11n) or wide area network (WAN). Said connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST) or session initiation protocol (SIP) or Internet Protocol Multimedia Subsystem (IMS). Addressing may be done using the well known uniform resource locators (URL), uniform resource identifiers (URI), names or namespaces of extensible markup language (XML Version 1.0, Third Edition, W3C Recommendation 8 December 2009).

The connection can but must not be directly between the devices. The typical use is on wide area networks with multiple intermediate devices where only a server 103 is depicted in figure 1.

Said video streams and images are according to the example received, sent and processed in real time on said server 103, said first device 152 or said second device 161. Said video streams or images may be received, sent or processed at different remote locations at different times or with delay or time shift, i.e. not in real time either.

Said video streams or images are captured or determined, e.g. computed, rendered and cropped to contain the appropriate content that allow to determine new images by simply overlaying the images to generate the content that needs to be displayed. This way the amount of data that needs to be transferred is further reduced. For example, real world background is removed from video streams or images showing a participant before transmitting. Alternatively for still images avatar like pictures or still images from local storage may be used instead of images of real participants captured during the conference.

While recording or determining said video streams or images, additional information is determined that describes the position of the video streams or images recorded or determined at the same remote location relative to each other. This information is for example added to the respective video streams or images as meta data, e.g. text strings "center", "left of center", "right of center", "above center" or "below center".

Said server 103 may be a single server or a virtual server comprising multiple different hardware devices such as servers, network interfaces and data links connecting said servers. Such virtual servers are for example widely used in a cloud computing environment and not further explained here.

Said first device 152 is adapted to determine and send a first video stream and to receive and display a second video stream, preferably in real time. Receiving and displaying video streams is known to the person skilled in the art and not explained further.

Said first device 152 is adapted to determine and send a first image and receive and display a second image. Receiving and displaying images is known to the person skilled in the art and not explained further.

In order to display said second video stream or said second image at least one display is connected to said first device 152. In the example three displays 151, 153, 154 are connected to said first device 152. Said three displays 151, 153, 154 are placed for example next to each other, where the displays 151, 153, 154 are placed around a reference point 144 in the middle of the displays 151, 153, 154 in a way that content displayed by them can be viewed by a person located near the reference point 144. Data links connecting said displays 151, 153, 154 to said first device 151 are depicted in figure 1 as dashed lines.

Said first device 152 is adapted to display said second video stream or said second image on a selected display or on selected displays of said displays 151, 153, 154. The displays are selected depending for example on said meta data. In the example "left of center", "center", "right of center" is used for the three displays 151, 153, 154 respectively.

Said first device 152 is adapted to determine and send a first video stream preferably in real time.

In order to determine said images for said first video stream at least one camera of said cameras 145, 146, 147, 148 is connected to said first device 152. In the example four cameras 145, 146, 147, 148 are connected to said first device 152. Said four cameras 145, 146, 147, 148 in the example are placed at the left and right side of the displays 151, 153, 154 with the exception, that only one camera of said cameras 145, 146, 147, 148 is placed between neighboring displays 151, 153, and 154.

Said cameras 145, 146, 147, 148 are adapted to capture images of any object that is within their field of vision and send them to said first device 152. Well known autofocus functions may be used to provide crisp images.

Data links from said cameras 145, 146, 147, 148 to said first device 152 are depicted in figure 1 as dashed lines. Said cameras 145, 146, 147, 148 face essentially towards said reference point 144 with a predetermined or selectable field of vision.

Essentially means that the field of vision may capture an area, e.g. a predetermined limited zone around said reference point 144. Deviations of this area may be used too. In figure 1 the field of vision of the cameras 145, 146, 147, 148 in the bird perspective are depicted as dashed lines originating from said cameras 145, 146, 147, 148. In real world, said fields of vision are typically conical shaped.

Hence an image of a first object 150, e.g. of a person, that is as depicted in figure 1 located near said reference point 144 is captured in individual images from different directions by said cameras 145, 146, 147, 148.

Furthermore said first device 152 is adapted to determine said first image and assign the appropriate meta data to it. In the example up to four individual first images may be directly derived from the images of said four cameras 145, 146, 147, 148. As the field of vision overlaps, preferably processed images are generated, that show adjacent areas. In case there is no directly matching camera for a chosen value for the desired viewing angle α1 a view may be computed using two or more cameras.

For example three first images are generated and assigned the meta data "left of center", "center", "right of center".

Alternatively to an image taken by or determined from images taken by a selected camera of said cameras 145, 146, 147, 148 an image from a local storage of said first device 152 may be used. For example an image showing a generic person from the back or side may be stored and sent as said first image instead of a video stream showing the real person from the back.

Furthermore said first device 152 is adapted to receive a first message comprising information about what to send and determine said first video stream or said first image depending on said information. Said information is for example a desired viewing angle α1 from which said reference point 144 shall be recorded.

In the example said first device 152 is adapted to determine and send said first video stream or said first image only from selected cameras of said cameras 145, 146, 147, 148 that capture said reference point 144 from essentially said desired viewing angle α1.

Said desired viewing angle α1 is for example an angle given in degrees relative to a predetermined 0° position. In the example said predetermined 0° position is a line orthogonal to the center display 151 through said reference point 144. This line is depicted in figure 1 as dashed line between said reference point 144 and said center display 151. The resulting viewing direction is depicted as arrow pointing towards said reference point 144 at said viewing angle α1.

To select said cameras for each camera of said cameras 145, 146, 147, 148 that is connected to said first device 152 a range of viewing angles is determined for example by an administrator and a mapping of range of viewing angles to said unique identifier of the respective camera is stored on said first device 152 for example in a data base.

According to the example said device 152 is adapted to upon receipt of a new desired viewing angle α1 in said first message look up all unique identifiers for which said range of viewing angles contains said desired viewing angle α and select the according cameras for sending said video stream. Said unique identifier is for example a real number and the selection is done by identifying the additional information in said video streams and selecting the video stream containing the same real number.

Furthermore said first device 152 is adapted to determine a position and an orientation β1 of a person essentially close to said reference point 144. Additionally said first device 152 is adapted to determine which of the three displays 151, 153, and 154 shall display said second video stream or said second image depending on said orientation β1.

Said orientation β1 is for example an angle relative to said predetermined 0° position that is determined depending on the direction said person essentially at said reference point 144 is looking to. This is depicted in figure 1 as arrow pointing away from said reference point 144 at said orientation β1. Said first device 152 is for example adapted to determine said orientation β1 as an angle between said viewing direction of said person and said orthogonal line by automatic image recognition capable of detecting viewing direction from images taken by said cameras 145, 146, 147, 148.

Furthermore said first device 152 is adapted to determine whether to send said first video stream or said first image depending on said orientation β1 of said first object 150 and said desired viewing angle α1. Said first device 152 is for example adapted to send said first video stream in case said orientation β1 and said desired viewing angle α1 are essentially the same. Furthermore said first device 152 is adapted to send said first image for cases where said orientation β1 and said viewing angle α1 differ by more than a predetermined threshold, e.g. 45°. Said first device 152 is for example adapted to send said first image only once after each change of said desired viewing angle α1, or until a safe receipt is confirmed in a receipt message.

In the example depicted in figure 1, the two leftmost cameras 145, 146 are selected to determine and send said first image instead of said first video stream because said orientation β1 is different by more than said threshold, e.g. 45° from said desired viewing angle α1.

As described above for said cameras, said data base may also be adapted to store a range of viewing angles that are mapped to the appropriate displays. For example the displays are identified uniquely by real numbers and the data base stores the appropriate real number and a mapping to said range of viewing angles.

The first device 152 is adapted for example to select displays by mapping orientation β1 to the unique identifiers of all displays that have the orientation β1 within their range of orientations β1.

Additionally said first device 152 is adapted to send a second message containing information about a desired viewing angle α2. Said orientation β1 is for example used to determine a desired viewing angle α2 from which said first object 150 wants to look at said second object 160 in said virtual conference room 300.

Said first device 152 is for example adapted to execute a teleconferencing client running on said first device 152, i.e. a computer program adapted to perform the tasks described above.

Said orthogonal line and the use of said viewing angle α are examples only. The invention applies likewise to any other way of describing the absolute or relative positions of reference point 144, displays 151, 153, 154 and cameras 145, 146, 147, 148. In particular no orthogonal line needs to be defined.

Instead of discrete displays, said canvas may be used. In this scenario sections of said canvas are projected onto with said second video streams or said second images as described above.

The setup at said second location may be the same as The setup at said second location may be the same as described above for said first location using an orientation β2 and a desired viewing angle α2.

Said second device 161 in the example is different and comprises a display 162 and a camera 165.

Said second device 161 is adapted to capture and send said second video stream or said second image preferably in real time. Said second device 161 is adapted to display said first video stream or first image via said display 162, preferably in real time.

Said camera 165 may be an external separate device that is connected to said second device 161 instead.

Said second device 161 is for example a handheld device that captures images covering a predetermined field of vision, depicted in figure 1 as dashed lines originating from said camera 165. Said camera 165 in this example faces always in the direction 170 orthogonal relative to said second device 161, e.g. that the user points it to.

Rotating said second device 161 hence results in a different direction 170 to be captured.

Said second device 161 furthermore comprises an acceleration sensor adapted to determine an acceleration of said second device 161 with respect to a predetermined initial point. Said initial point is for example determined as 0° at the time said second device 161 is turned on.

Furthermore said second device 161 is adapted to determine and send information about said desired viewing angle α1. Said information about said desired viewing angle α1 is for example determined depending on acceleration of said second device 161 that is measured by said acceleration sensor.

In the example said second device 161 is adapted to determine said desired viewing angle α1. To that end said second device 161 permanently determines acceleration signals from said acceleration sensor. Furthermore said second device 161 is adapted to determine from said acceleration signals measured over time a relative orientation of said second device 161 in degrees with respect to said initial point, e.g. 0°.

For example a user rotating said second device 161 to the right by 50° would result in said acceleration sensor measuring the appropriate acceleration over time and said second device 161 to determine said desired viewing angle α1 = +50°.

Rotating by 50° to the left would in this example result in said desired viewing angle α1 = 360°-50°=310°.

Any other means of input may be used to determine said desired viewing angle α1. For example a cursor or track ball attached to said second device 161 could be used instead.

Said second device 161 is for example adapted to execute a teleconferencing client running on said second device 161, i.e. a computer program adapted to perform the tasks described above.

Each of said clients is adapted to receive information about any other teleconference client's position and orientation in a virtual conference room. In the example said first message and said second message comprising the respective desired viewing angles are used. Said first message or said second message may comprise additional information, e.g. said orientation β1 or said orientation β2 in order to decide whether to send still images to remote devices or video streams.

Said second device 161 is for example adapted to send said orientation β2 with said desired viewing angle α1.

Said fist device 152 is for example adapted to send said first video stream only case said orientation β2 is essentially matching said desired viewing angle α1 and said first still image otherwise.

Said first device 152 is for example adapted to send said orientation β1 with said desired viewing angle α2.

Said second device 161 is for example adapted to send said second video stream only case said orientation β1 is essentially matching said desired viewing angle α2.

To that end for example said teleconference clients running on first device 152 or said second device 161 exchange messages containing said information.

Said second device 161 is adapted to receive said first video stream and said first image.

Furthermore said second device 161 is adapted to display said first video stream for example in a first area of said display 162 and on appropriate sides of said first area display the appropriate image showing an image essentially adjacent to said of said first video stream. For example said first video stream is displayed on a center area of said display 162 and said first image is displayed adjacent left and right of said center area.

Said first image and said first video stream are updated with respect to the area they show relative to said reference point 144, whenever said desired viewing angle α1 changes.

Said second device 161 is adapted to create said second video stream using said camera 165, preferably in real time.

Said second video stream is determined for example as a copy of the images captured by said camera 165 and sent to said first device 152.

Additionally said second device 161 is adapted to store parts of said second video stream, e.g. second images, on a local storage. Said second images are for example recorded at the beginning of a transmission from said second device 161. For example a user of said second device 161 is prompted by a user manual, to hold said second device 161 straight forward, camera 165 facing said user (0° position), and to rotate said second device 161 in the horizontal plane from that 0° position to the left and right as much as desired up to +/-180° to capture up to a 360° view of him/herself. This way images of said user are stored showing said user from other angles than the 0° front view.

Alternatively generic three dimensional (avatar like) images of real or non-real persons may be read from local storage and used instead.

When more than two participants are present, said devices are adapted to receive and display any number of said second video streams or second images depending on the number of participants of said video conference and display them at the appropriate display or area of canvas or display depending on the respective information about respective desired viewing angles or the respective orientations. In the example all received video streams or images are overlaid according to the meta-information. Other methods may be used, such as rendering or video stitching.

According to the example each of said devices is adapted to determine the appropriate video streams or images recorded by selected cameras.

To that end for example a teleconferencing host computer program may be used that runs on either of said devices or said server 103 and automatically detects incoming video streams and images from said teleconferencing client running on said remote device.

As describe above said video streams or said images may be determined using a single image or by combining together more than one image captured by selected cameras.

Said devices are adapted to select the right area of said images depending on the desired viewing angles, by selecting areas in said images taken by said cameras that are essentially adjacent to each other. Said devices area adapted to add metadata, e.g. "left of center", "center" or "right of center" and embed it into said video streams or images.

Said images are determined and sent for example any time any of said desired viewing angles.

Figure 3 shows the situation in said virtual conference room 300 for two participants, said first object 150 and said second object 160. Said virtual conference room 300 is for example a collection of images showing the walls of the room and furniture, e.g. a table 320 and a whiteboard 350.

In the example said virtual conference room 300 is a rectangular room and said Cartesian coordinate system has it's origin at one of the corners of said rectangle.

Said table 320 is for example at location (1.2, 2) and said whiteboard 350 is for example at location (0.2, 2.5).

Said virtual conference room also comprises a virtual reference point 310 that in this example is in the center of said table 320.

Each of said objects is described using an outer cylinder and an inner cylinder. Both cylinders are concentric and depicted in figure 3 in bird view as circles.

Each outer cylinder is marked with virtual outer orientation. In the example this is defined and depicted as the intersection point of a straight line from the center of each outer cylinder to said virtual reference point 310 and the respective outer cylinder. In the example this intersection point is assigned 0°.

Said inner cylinder according to the example represents said orientation and the center of said cylinders a position of the respective object in said virtual conference room 300.

Said orientation is defined in the example as β1 and β2 for the first object 150 and the second object 160 respectively.

Said first object 150 in the example is located at position (2, 2), and said second object 160 is in the example located at position (1, 1) of said Cartesian coordinate system.

Said desired viewing angle in this example is defined as desired viewing angle α1 for said first object 150 and as desired viewing angle α2 for said second object 160.

According to the example the desired viewing angles are determined from the position of said first object 150 and said second object 160 relative to each other.

This way that each user orientation and viewing angle with respect to a virtual environment is computed considering the demand of information exchanged to offer an experience matching and even exceeding the experience of real world meetings by offering an inward (e.g. inner cylinder) and an outward (e.g. outer cylinder) oriented surface to import and export audio and video respective image information.

This means that each participant can modify the desired viewing angle from which he/she is looking at the remote object or person by moving its position relative to the other person in said virtual room. Also each user can modify the direction in which he is looking by changing orientation.

In the example of figure 3, the orientation β1 of said first object 150 is towards the whiteboard 350 and the orientation β2 of said second object is towards said first object 150.

When messaging and processing is in real time, said user viewing said video on said remote device is able seamlessly feel integrated in the virtual conference room. This results in much better orientation in and integration into the video conference.

The appropriate first video stream and first images are determined for example depending on said desired viewing angle α1 and said orientation β1 by said first device 152.

The appropriate second video stream and second images are determined for example depending on said desired viewing angle α2 and said orientation β2 by said second device 161. In the example said second video stream is a copy of images from said camera 165, because only one camera 165 is available at said second device 161.

Additionally in a multi participant scenario, said orientation β1 of said first object 150 in the real world depicted in figure 1 may be used to influence which of said displays 151, 153, 154 shows which of said second video streams and which display shows which second image. For example said orientation β1 is pointing directly to the leftmost real world display 151, see figure 1. Therefore said rightmost display 154 shows said second video stream of the part of the virtual conference room 300, said first object 150 in said virtual conference room 300 is looking at. In this case there is no other person in view, but the wall of said conference room with said whiteboard 350.

The other displays 151, 153 in this scenario show the appropriate adjacent second images of the walls of said conference room 300 to the left of said whiteboard 350 and said second object 160. Said wall images of said video conference room 300 are for example stored on and read from said local storage.

To be able to view said second object 160 in said virtual conference room 300 in said second video stream, said first object 150 may change orientation β1 inside said virtual conference room 300, e.g. to face said second object 160. This change may be done according to the example by the person changing its real world orientation β1 by looking at said leftmost display 151.

Likewise the user of said second device 161 can, by rotating said second device 161 or by rotating himself with said second device 161 in his hands, directly influence what his/her orientation relative to said direction 170 and by this also his/her orientation β2 in said virtual conference room 300 relative to his outer cylinder 0° position. Therefore he/she can control which are he/she is viewing as a video stream.

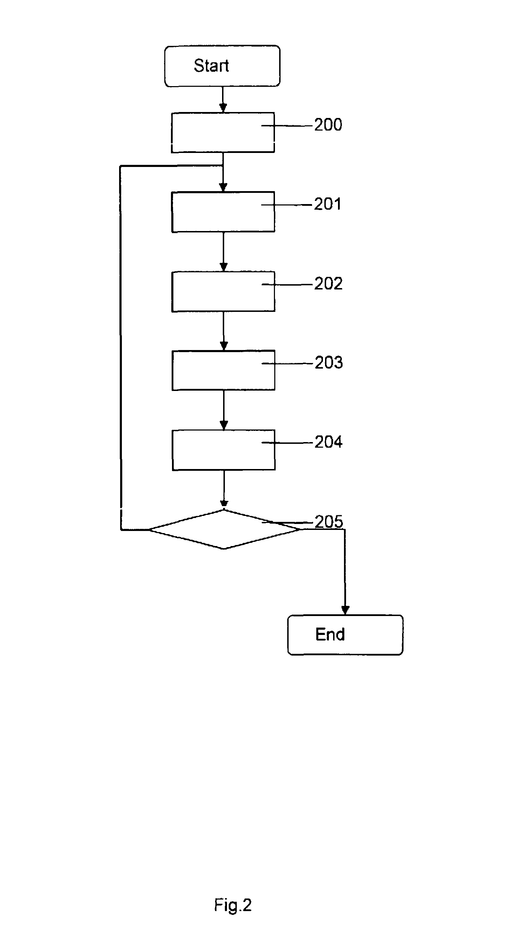

A method for conducting a teleconference is described below making reference to figure 2. The method is described for two participating devices, said first device 152 and said second device 161. However the method scales to any other number of devices.

Information about said virtual conference room 300 is for example provided by a computer program that is accessible by participants of said video conference via a link, e.g. a hyper text markup language link.

Before the start of said method, the individual position of the participants in said virtual conference room 300 is determined by each of said participants. To that end each of said participants receives upon sending a request message requesting said individual position in said virtual conference room 300 a response message with an identifier uniquely identifying said first object 150 and said individual position.

Said first object 150 receives in the example of figure 3 the position (2, 2) and the identifier 150. Said second object 160 receives in the example of figure 3 the position (1, 1) and the identifier 160.

Said method starts, for example, upon initiation of said video conference by one of said participants, after all devices are already connected and the configuration of the respective devices is determined. The method is described for said first video stream and said second video stream as well as said first image and said second image. Said method may be executed synchronous or asynchronous for individual streams or images as well.

After the start a step 200 is executed.

In said step 200, said variables for orientations and for viewing angles are initialized to 0°. Additionally each of said participants initializes said video stream and said images with to a default image, e.g. a black image or an image of said participant from the front view.

Afterwards a step 201 is executed.

In said step 201, said information about said desired viewing angles that are requested from other objects is determined. For example said first message or said second message is determined from said orientations and sent to the appropriate object that is in said virtual conference room 300.

Afterwards a step 202 is executed.

In said step 202 said variables for said desired viewing angles are updated with the desired viewing angles received in said first message or said second message. If no updated values are available, the current value is used.

Said desired viewing angles may be determined depending on the position of said first object 150 relative to said second object 160 in said virtual conference room 300.

Said desired viewing angle α2 is for example determined from said relative position of said first object 150 and said second object 160 from the theorem of intersecting lines and angular sums in the triangle depicted in figure 3.

For example the desired viewing angle α2 = 30° is in this case sent to said second device 161.

Likewise said desired viewing angle α1 is in this case determined, e.g. as angle α1 = 30° and sent to said first device 152.

To that end the relative position may be determined from movements of the objects in the video streams received from said cameras 145, 146, 147, 148, 165. Instead or additionally to the relative position, also the direction said participant is looking into may be recognized and used. To that end the initially assigned positions and orientations may be updated frequently, e.g. every second, by object recognition algorithms. Image recognition algorithms are well known to the person skilled in the art and not further explained here. This way a realistic interaction between participants of said video conference is achieved from automatic detected behavior of participants.

Afterwards a step 203 is executed.

In said step 203 said video streams are determined.

Said second video stream is determined depending on information received from said remote location, e.g. said said desired viewing angle α2.

According to the example, said orientation β2 of said second object 160 is essentially facing said first object 150. This means that in this case said orientation β2 does point towards essentially the same area as said desired viewing angle α2. Therefore said first video stream showing said first object 160 from the front is sent from said second device 161 to said first device 152.

Said first video stream is determined depending on said information received from said remote location, e.g. said desired viewing angle α1.

According to the example, said orientation β1 of said first object 150 is not essentially facing said second object 160.

Therefore no first video stream is sent but a first image showing said first object 152 from the desired viewing angle α1. To determine said first image in the example said desired viewing angle α1 is mapped via said data base to identify said selected cameras of said cameras 145, 146, 147, 148. In the example the two leftmost cameras 145, 146 are selected.

Afterwards said first image is determined from the individual images recorded by said selected cameras 145, 146. Said first image is for example determined by calculating the appropriate areas of the individual images recorded by the selected cameras 145, 146 depending on said desired viewing angle α1 and then performing cropping and video stitching on the selected areas. The size of the areas is for example subject to the desired resolution of said first frame. This way the user at the remote site can control the angle and point of view from which he looks at the object or person participating in the video conference.

Equivalently said second image is determined for said desired viewing angle α2. In the example, there is only one other camera 165 at the remote location, so the frames recorded by this camera 165 are simply copied. In current position and orientation of said objects in the example no second video stream is determined.

Alternatively or additionally said orientation β1 and said desired viewing angle α2 or said orientation β2 and said desired viewing angle α1 may be used together to determine whether to send still images or video streams. For example video streams are sent only if the respective orientation matches essentially the respective desired viewing angle and still images are sent otherwise.

Alternatively or additionally said data rate or said resolution for said still images or video streams may be changed depending on said desired viewing angles or orientations. For example video streams are sent at high resolution or high data rate only if the respective orientation matches essentially the respective desired viewing angle and still images or video streams are sent at a lower resolution or data rate otherwise.

If there were more second video streams available, the appropriate of said second video streams would be selected depending on said orientation and the respective desired viewing angle. For example, if three different second video streams were available, second video streams or second images for each display 151, 153, 154 would be determined and the orientation β1 would be used to determine which of said second video streams or images would be displayed on which display.

In the example in figure 1 the orientation β1 is directed towards the rightmost display 154, so said second video stream to be displayed on said rightmost display 154 would be marked as "right of center" and sent.

For any unavailable first or second video stream default images may be used.

Afterwards a step 204 is executed.

In said step 204 additional first and second images are determined to complete the view.

Said additional images are determined depending on said positions and said orientations.

In the example two additional second images, "left of center" and "center" are determined. Said second images are determined as two neighboring images for the displays 151, 153 to the left. However said second device 161 can't record multiple viewing angles at a time. Therefore said additional frames are read from local storage and sent to said first device 152 with the appropriate meta data.

Likewise additional first images would be determined and sent to said second device 161. As said first device 151 is capable of recording with more than one camera, actual images from that cameras may be used. Therefore In the example said desired viewing angle α1 points from the leftmost cameras 145, 146 and hence said additional images recorded by the leftmost cameras 147, 148 are used. However as said second device 161 is not capable of displaying more than one image at a time in this example no additional first images may be sent. Alternatively said additional first image may be sent and said second device 161 may display it on said area of said display 162 next to said first video stream.

Preferably said additional images are determined to show part of a scene essentially adjacent to the part of the same scene shown by the respective first image, first video stream, second image or second video stream. This guarantees seamless continuation of the images displayed at the remote location and improves the user experience.

Afterwards a step 205 is executed.

In said step 205 said video streams, images and additional images are sent. Sending may be asynchronous or synchronous.

Said additional images may be sent to the respective remote location at a lower data rate as said video streams or first or second images. Said data rate is for example determined depending on information received from said remote location, e.g. said desired viewing angles or said orientations.

This reduces the data transmission rate for the information about the surroundings, giving more capacity to the main video feed to guarantee a high quality video conference service.

Said additional images may be sent only, in case a change occurred to said desired viewing angle or said orientation.

Afterwards a step 206 is executed.

In said step 206 a test is performed to determine if said video conference shall continue or not. In case said video conference shall continue, said step 201 is executed. Otherwise said method ends.

Conducting said video conference is extended to include the parallel determination of audio signals matching said video streams or images. To that end, for example the audio of said video streams is focused to the sounds recorded from microphones depending on information received from said remote location, e.g. said desired viewing angle or said orientation. For example said microphones are used that are at the same location as said selected cameras of said cameras 145, 146, 147, 148. No audio may be used for images. Noise levels may be adjusted depending on the relative position of said first object 150 and said second object 160. This way the audio experience matches the video experience, further enhancing the user experience.

A computer program contained on a computer program product may be implemented according to the aforementioned method and executed on a computer to conduct said video conference.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for conducting a video conference, **wherein** from a first image of a video stream recorded by a camera (145, 146, 147, 148, 165) at least a part is sent (205) to be displayed at a remote location, wherein at least one additional image is determined (204) and sent (205) at least partially to be displayed adjacent to said first image at said remote location.

2. The method according to claim 1, wherein said additional image is recorded as image of a video stream and said additional image is displayed at said remote location as a part of a video stream.

3. The method according to claim 1, wherein said additional image is recorded as a still image and said additional image is displayed at said remote location as a still image.

4. The method according to claim 1, wherein said additional image is sent (205) to said remote location at a lower resolution as said first image, wherein said resolution is determined (204) depending on information received from said remote location, in particular a desired viewing angle (α1, α2) or an orientation (β1, β2).

5. The method according to claim 1, wherein said additional image is sent to said remote location at a lower data rate as said video stream containing said first image, wherein said data rate is determined (204) depending on information received from said remote location, in particular a desired viewing angle (α1, α2) or an orientation (β1, β2).

6. The method according to claim 1, wherein said additional image is showing part of a scene essentially adjacent to the part of the same scene shown by said first image part.

7. The method according to claim 1, wherein said first image is determined (203) depending on information received from said remote location, in particular a desired viewing angle (α1, α2) or an orientation (β1, β2).

8. The method according to claim 9, wherein said desired viewing angle (α1, α2) or said orientation (β1, β2) are determined from a position of a first object (150) recorded by said camera (145, 146, 147, 148) relative to a second object (160) recorded by another camera (165) at said remote location.

9. The method according to claim 1, wherein said first image is determined (203) from individual images recorded by multiple cameras (145, 146, 147, 148) in individual video streams, in particular depending on said desired viewing angle (α1, α2) or said orientation (β1, β2), received from said remote location.

10. The method according to any of the aforementioned claims, wherein transmission of said signals is in real time.

11. A system for conducting a video conference, **wherein** a first device (152, 103) is adapted to determine (204) and send (205) at least a part of a first image of a video stream recorded by a camera (145, 146, 147, 148) to be displayed as image of a video stream at a remote location, wherein said first device (152, 103) is adapted to determine (204) at least one additional image to be displayed adjacent to said first image at said remote location, wherein a second device (161) at said remote location is adapted to receive and display said images.

12. A first device (152, 103) **wherein** said first device (152, 103) IS adapted to send (205) at least a part of a first image of a video stream recorded by a camera (145, 146, 147, 148) to be displayed as image of a video stream at a remote location, wherein said first device (152, 103) is adapted to determine (204) and send (205) at least one additional image to be displayed adjacent to said first image at said remote location.

13. A second device (161) for conducting a video conference, **wherein** said second device (161) at a remote location is adapted to receive and display an image of a video stream comprising at least a part of a first image of a video stream recorded by a camera (145, 146, 147, 148) to be displayed as image of a video stream at said remote location, wherein said second device (161) is adapted to display at least one additional image adjacent to said first image at said remote location.

14. A computer program for conducting a video conference, **wherein** said computer program, when executed on a computer, causes the computer to send (205) from a first image of a video stream recorded by a camera (145, 146, 147, 148) at least a part to be displayed as image of a video stream at a remote location, and to determine (204) and send (205) at least one additional image at least partially to be displayed adjacent to said first image at said remote location.

15. A computer program product for conducting a video conference comprising a computer usable medium having a computer readable program, **wherein** said computer readable program, when executed on a computer, causes the computer to send (205) from a first image of a video stream recorded by a camera (145, 146, 147, 148) at least a part to be displayed as image of a video stream at a remote location, and to determine (204) and send (205) at least one additional image at least partially to be displayed adjacent to said first image at said remote location.
